# EUROPÄISCHE PATENTANMELDUNG

(11) **EP 1 998 049 A2**
(43) Veröffentlichungstag der Anmeldung: **03.12.2008**
(21) Anmeldenummer: 08009031.9
(22) Anmeldetag: 15.05.2008
(51) Int. Cl.: F04D 29/24, F04D 29/38

(54) **Strömungsarbeitsmaschinenschaufel mit Multi-Profil-Gestaltung**

(30) Priorität: 29.05.2007 DE 102007024840
(71) Anmelder: Rolls-Royce Deutschland Ltd & Co KG, 15827 Blankenfelde-Mahlow (DE)
(72) Erfinder: Gümmer, Volker, 15831 Malow (DE)
(74) Vertreter: Weber, Joachim

(57) **Zusammenfassung**

Die Erfindung bezieht sich auf eine Strömungsarbeitsmaschinenschaufel (6) mit einem Querschnitt, welcher in mindestens einem Teil der Höhe der Schaufel in mindestens einem Stromlinienprofilschnitt (P-P) von mindestens zwei voneinander getrennten Teilprofilen gebildet wird, wobei jedes einzelne Teilprofil die Form eines Schaufelprofils aufweist.

## Beschreibung

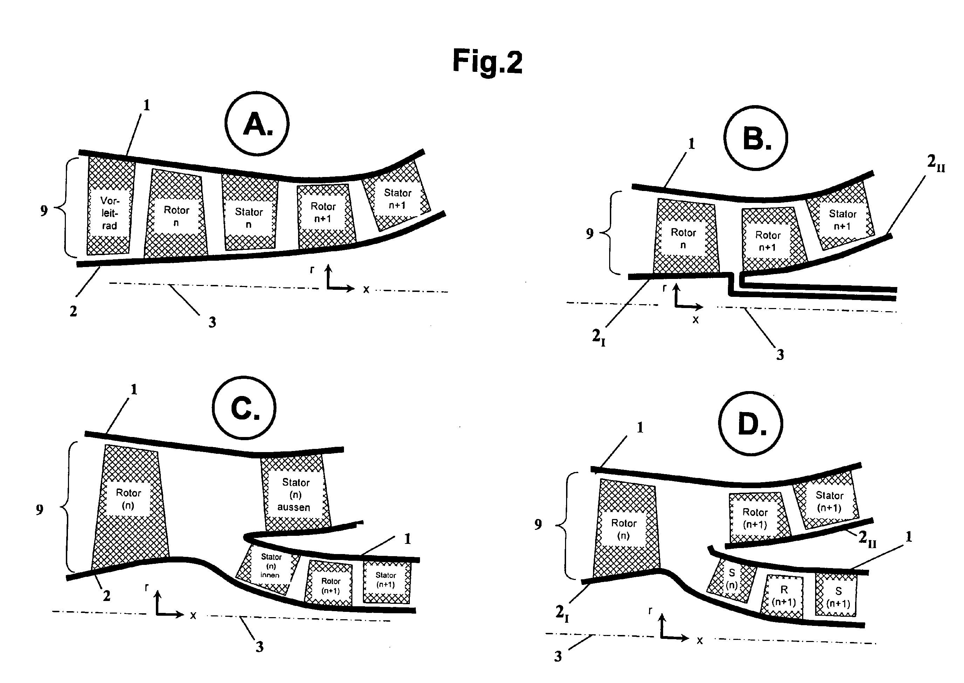

Die vorliegende Erfindung bezieht sich auf Schaufeln von Strömungsarbeitsmaschinen wie Bläser, Verdichter, Pumpen und Ventilatoren axialer, halbaxialer und radialer Bauart mit gasförmigem oder flüssigem Arbeitsmedium. Die Strömungsarbeitsmaschine kann eine oder mehrere Stufen mit jeweils einem Rotor und einem Stator umfassen, in Einzelfällen wird die Stufe lediglich durch einen Rotor gebildet. Der Rotor besteht aus einer Anzahl von Schaufeln, die mit der rotierenden Welle der Maschine verbunden sind und Energie an das Arbeitsmedium abgeben. Der Rotor kann mit oder ohne Deckband am äußeren Schaufelende ausgeführt sein. Der Stator besteht aus einer Anzahl feststehender Schaufeln, die nabenseitig wie gehäuseseitig mit festem oder freiem Schaufelende ausgeführt sein können. Die Rotortrommel und die Beschaufelung sind üblicherweise von einem Gehäuse umgeben, in anderen Fällen, z. B. bei Propellern oder Schiffsschrauben, existiert kein Gehäuse. Die Maschine kann auch einen Stator vor dem ersten Rotor, ein sogenanntes Vorleitrad aufweisen. Mindestens ein Stator oder Vorleitrad kann -abweichend von der unbeweglichen Fixierung- drehbar gelagert sein, um den Anstellwinkel zu verändern. Eine Verstellung erfolgt beispielsweise durch eine von außerhalb des Ringkanals zugängliche Spindel. Alternativ kann die besagte Strömungsarbeitsmaschine bei Mehrstufigkeit zwei gegenläufige Wellen besitzen, so dass die Rotorschaufelreihen von Stufe zu Stufe die Drehrichtung wechseln. Hierbei existieren keine Statoren zwischen aufeinander folgenden Rotoren. Schließlich kann die Strömungsarbeitsmaschine alternativ eine Nebenstromkonfiguration derart aufweisen, dass sich der einstromige Ringkanal hinter einer bestimmten Schaufelreihe in zwei konzentrische Ringkanäle aufteilt, die ihrerseits mindestens jeweils eine weitere Schaufelreihe beherbergen. Fig. 2 zeigt beispielhaft vier mögliche Konfigurationen der Strömungsarbeitsmaschine.

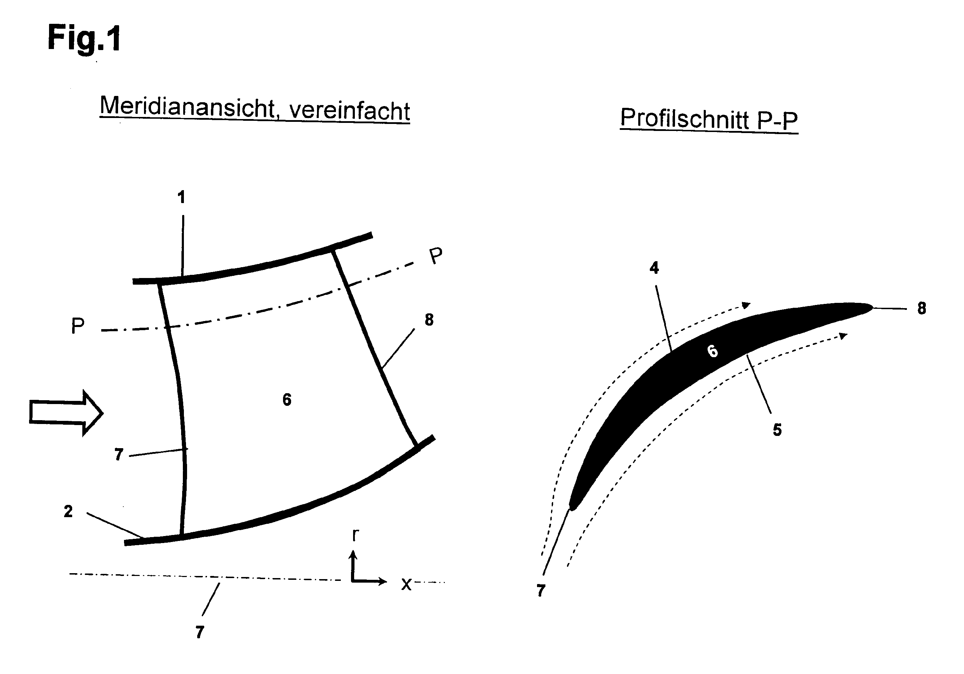

Die Strömung in Schaufelreihen aerodynamisch hoch belasteter Strömungsarbeitsmaschinen ist gekennzeichnet durch eine sehr hohe zu erreichende Strömungsumlenkung. Die erforderliche Strömungsumlenkung kann entweder in Teilen der Schaufelhöhe oder entlang der gesamten Schaufelhöhe so hoch werden, dass eine konventionelle, nach dem Stand der Technik ausgeführte Gestalt der Schaufelprofilschnitte zu frühzeitiger Ablösung der Grenzschichtströmung auf dem Schaufelprofil und im Seitenwandbereich an Nabe und Gehäuse führt. Übliche Schaufeln, wie sie in Fig.1 dargestellt sind, ohne zusätzliche Gestaltungsmerkmale zur Stabilisierung der Profil- und Wandgrenzschichten, sind aufgrund extrem hoher Druckverluste und der Nichterreichung der angestrebten Strömungsumlenkung ungeeignet. Zudem werden die im Bereich der begrenzenden Seitenwände (an Nabe und Gehäuse) auftretenden Sekundärströmungen unbeherrschbar und führen zu weiteren sehr hohen Totaldruckverlusten. Die Konsequenz ist ein insgesamt schlechtes Leistungsverhalten der Strömungsarbeitsmaschine im Hinblick auf den Wirkungsgrad und die verfügbare Stabilitätsmarge.

Schaufelreihen mit einer Profilgestaltung nach dem Stand der Technik, siehe Fig.1, besitzen aufgrund der starken auftretenden aerodynamischen Belastung der Grenzschichten, d.h. der zweidimensionalen Grenzschichten auf dem Profil und dreidimensionalen Grenzschichten an Nabe- und Gehäusewand, einen zu geringen Arbeitsbereich und zu hohe Verluste, um die in modernen Strömungsarbeitsmaschinen erforderlichen Betriebskennwerte zu erbringen.

Der Erfindung liegt die Aufgabe zugrunde, eine Schaufel für eine Strömungsarbeitsmaschine zu schaffen, welche sich durch einen höheren Wirkungsgrad auszeichnet.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist für den Einsatz in einer Strömungsarbeitsmaschine eine Schaufel geschaffen, die in mindestens einem Teil der Ringkanalweite (beziehungsweise der Schaufelhöhe) in mindestens einem Stromlinienschnitt durch mindestens zwei voneinander getrennte Profile gebildet wird, von denen jedes einzelne im Wesentlichen die Form eines Schaufelprofils aufweist und eine rund geformte Nase (Vorderkante) besitzt.

Im Folgenden wird die Erfindung anhand von Ausführungsbeispielen in Verbindung mit den Figuren beschrieben. Dabei zeigt:
- Fig. 1: die schematische Darstellung einer Schaufel nach dem Stand der Technik,
- Fig. 2: mögliche Konfigurationen erfindungsrelevanter Strömungsarbeitsmaschinen,
- Fig. 3: Beispiel einer erfindungsgemäßen Schaufel, schematisch,
- Fig. 4: weitere Beispiele erfindungsgemäßer Schaufeln in der Meridianansicht,
- Fig. 5: die Definition von Meridianstromlinien und Stromlinienprofilschnitten,
- Fig. 6a: erfindungsgemäße Multi-Profil-Gestaltung, betrachtet in einem Stromlinienprofilschnitt,
- Fig. 6b: weitere erfindungsgemäße Multi-Profil-Gestaltungen, betrachtet in einem Stromlinienprofilschnitt,
- Fig. 7a: Beispiele einer Multi-Profil-Gestaltung im mittleren Bereich einer Schaufel, räumliche Ansicht,
- Fig. 7b: Beispiele einer Multi-Profil-Gestaltung am festen Ende einer Schaufel, räumliche Ansicht,
- Fig. 7c: Beispiele einer Multi-Profil-Gestaltung am freien Ende einer Schaufel, räumliche Ansicht,
- Fig. 8: Definition von Zonen erfindungsgemäß besonders günstiger Positionierung der Front-Profil-Hinterkante.

Eine konventionelle Schaufel nach dem Stand der Technik, wie sie in Fig.1 gezeigt ist, besitzt keine über einem ausgewählten Teil der Schaufelhöhe vorgesehene Unterteilung in mehrere nacheinander angeordnete Profile. Bekannt sind lediglich sogenannte Tandemkonfigurationen, bei denen eine Umlenkaufgabe durch zwei baulich voneinander getrennte Schaufelreihen erfüllt wird. Die rechte Seite der Fig.1 zeigt einen Profilschnitt der auf der linken Bildseite im Meridianschnitt dargestellten Schaufel. Im Meridianschnitt erfolgt die Anströmung, angedeutet durch den dicken Pfeil, von links nach rechts. Bei konventionellen Schaufeln verläuft die Strömung um die einzelnen Profilschnitte der Schaufeln (siehe Profilschnitt P-P) von der Vorderkante an getrennt und ohne. Fluidkommunikation zwischen den Schaufelseiten.

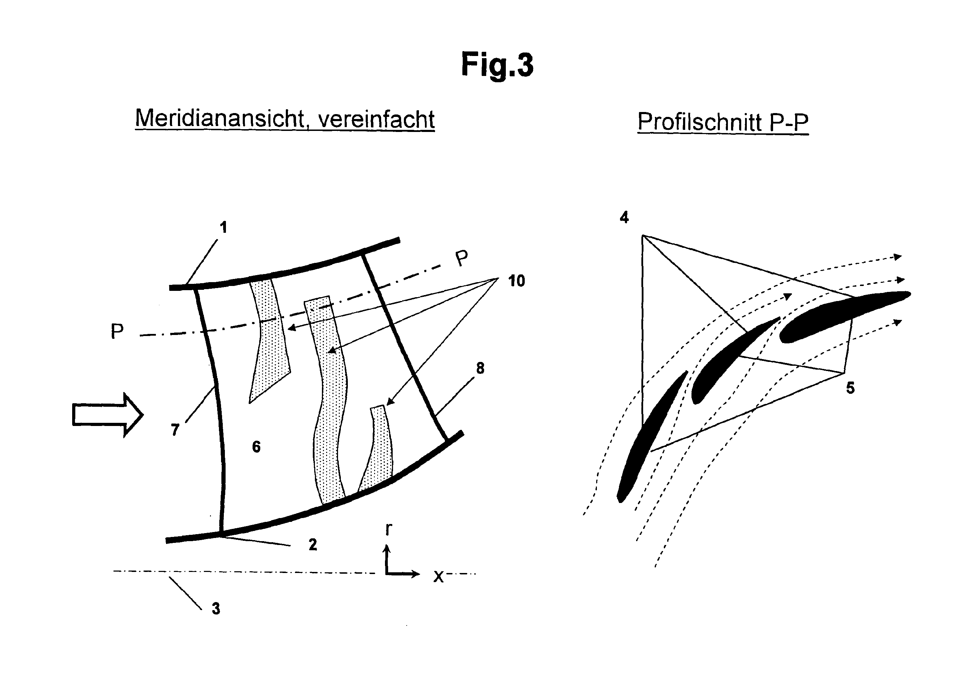

Die Fig.3 zeigt das Beispiel einer erfindungsgemäßen Schaufel. Auch hier ist die Schaufel im Meridianschnitt mit Anströmung von links (linker Bildteil) und in einem ausgewählten Profilschnitt P-P (rechter Bildteil) dargestellt. Die Schaufel weist in der gezeigten Darstellung mehrere Unterteilungen des Profils auf, die in Schaufelhöhenrichtung unterschiedliche Länge und Form aufweisen und jeweils in einem ausgewählten Teilbereich der Schaufelhöhe (Ringkanalweite) angeordnet sind. Abweichend von der hier gewählten Darstellung sind selbstverständlich auch Schaufeln mit einer geringeren oder höheren Anzahl von Unterteilungen erfindungsgemäß.

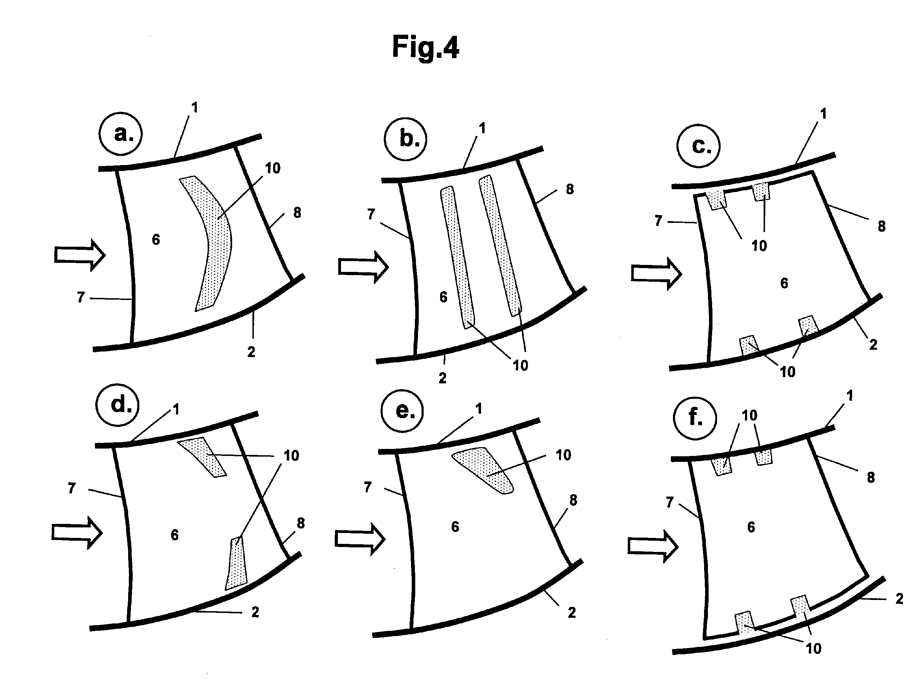

Die Fig.4 zeigt weitere Beispiele erfindungsgemäßer Schaufeln. So zeigt das Beispiel (a.) eine Profilunterteilung im mittleren Bereich der Schaufel. Das Beispiel (b.) zeigt zwei hintereinander angeordnete Profilunterteilungen im mittleren Bereich der Schaufel. Das Beispiel (c.) zeigt eine Schaufel mit freiem Ende am Gehäuse und Profilunterteilungen unmittelbar am inneren und äußeren Schaufelende. Das Beispiel (d.) zeigt zwei in Nähe von Nabe und Gehäuse im Hinterkantenbereich angeordnete, schräg orientierte Profilunterteilungen. Das Beispiel (e.) zeigte eine einzelne in Nähe des Gehäuses im Hinterkantenbereich angeordnete Profilunterteilung. Das Beispiel (f.) zeigt eine Schaufel mit freiem Ende an der Nabe und kleineren Profilunterteilungen unmittelbar am inneren und äußeren Schaufelende.

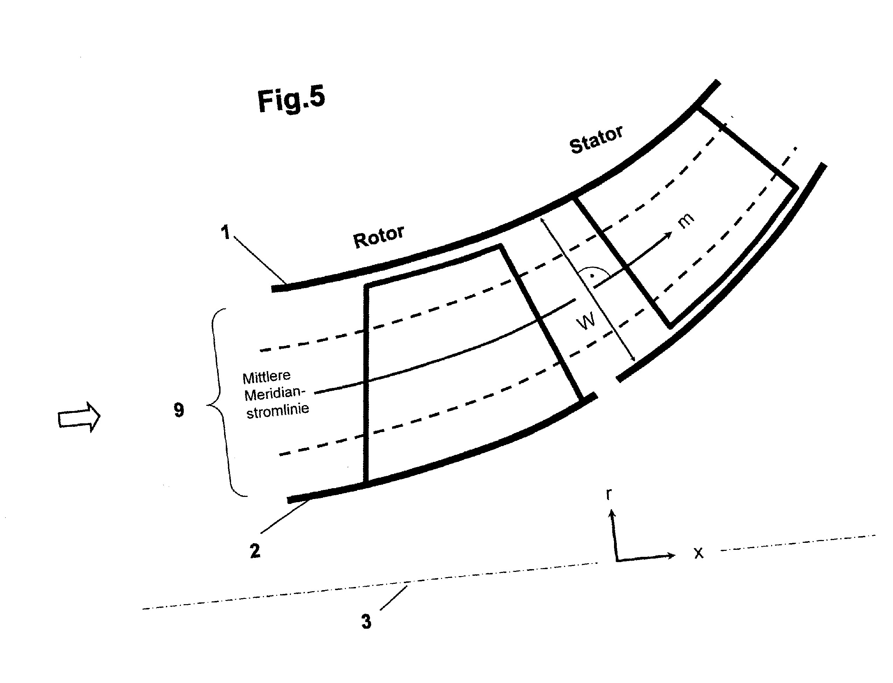

Fig.5 gibt eine genaue Definition der Meridianstromlinien und der Stromlinienprofilschnitte. Die mittlere Meridianstromlinie wird durch die geometrische Mitte des Ringkanals gebildet. Errichtet man an jedem Ort der mittleren Stromlinie eine Normale, so erhält man zum einen den Verlauf der Ringkanalweite W entlang des Strömungspfades und zum anderen eine Anzahl von Normalen, mit deren Hilfe sich durch gleiche relative Unterteilung der Normalen in Richtung der Ringkanalweite weitere Meridianstromlinien ermitteln lassen. Der Schnitt einer Meridianstromlinie mit einer Schaufel ergibt einen Stromlinienprofilschnitt. Weitere Betrachtungen der erfindungsgemäßen Schaufel erfolgen auf der Grundlage von Stromlinienprofilschnitten.

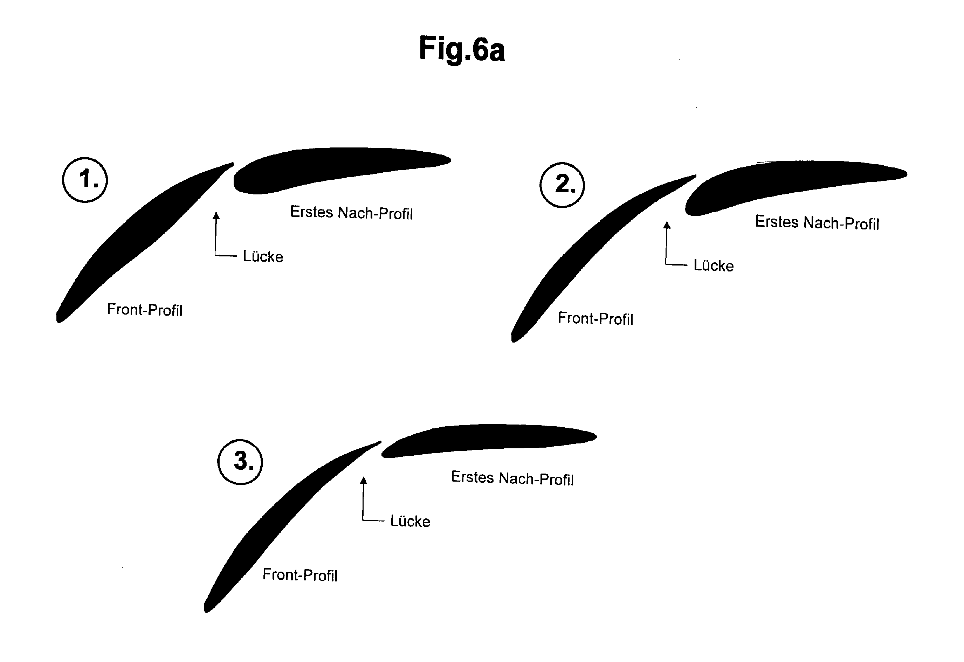

Fig. 6a zeigt erfindungsgemäße Schaufelkonfigurationen in einem ausgewählten Stromlinienprofilschnitt. Die Darstellung (1.) zeigt eine Unterteilung in zwei Profile, d. h. Front-Profil und erstes Nach-Profil (N=2), die aufgrund ihrer großen maximalen Dicke bauchig und tropfenförmig ausgebildet sind. Die Darstellung (2.) zeigt eine Unterteilung in zwei Profile (N=2), wobei das Front-Profil im Vergleich zum ersten Nach-Profil schlank ausgeführt ist. Die Darstellung (3.) zeigt eine Unterteilung in zwei Profile (N=2), wobei das Front-Profil und das erste Nach-Profil etwa gleich schlank ausgeführt sind.

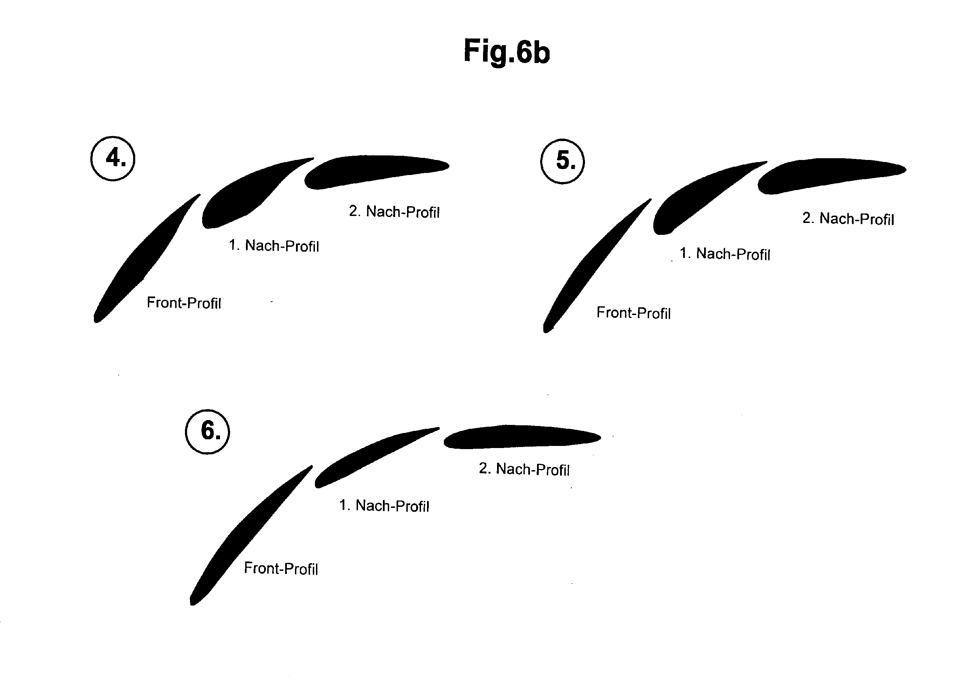

Fig.6b zeigt weitere erfindungsgemäße Anordnungen mit Multi-Profil-Gestaltung, ebenfalls im Stromlinienprofilschnitt. Die Darstellung (4.) sieht eine Profilunterteilung in drei Einzelprofile, d. h. Front-Profil, erstes Nach-Profil und zweites Nach-Profil (N=3) vor, wobei alle drei Profile etwa gleiche relative Dicke von über 5% aufweisen und Front-Profil und erstes Nach-Profil von ausgeprägt bauchiger Form sind. Die Darstellung (5.) sieht eine Profilunterteilung in drei Einzelprofile (Front-Profil, erstes Nach-Profil und zweites Nach-Profil) vor, wobei das Front-Profil schlank gegenüber dem ersten und zweiten Nach-Profil ist. Die Darstellung (6.) sieht eine Profilunterteilung in drei Einzelprofile (Front-Profil, erstes Nach-Profil und zweites Nach-Profil) vor, wobei alle drei Profile von geringer aber etwa gleicher relativer Dicke (kleiner 5%) sind.

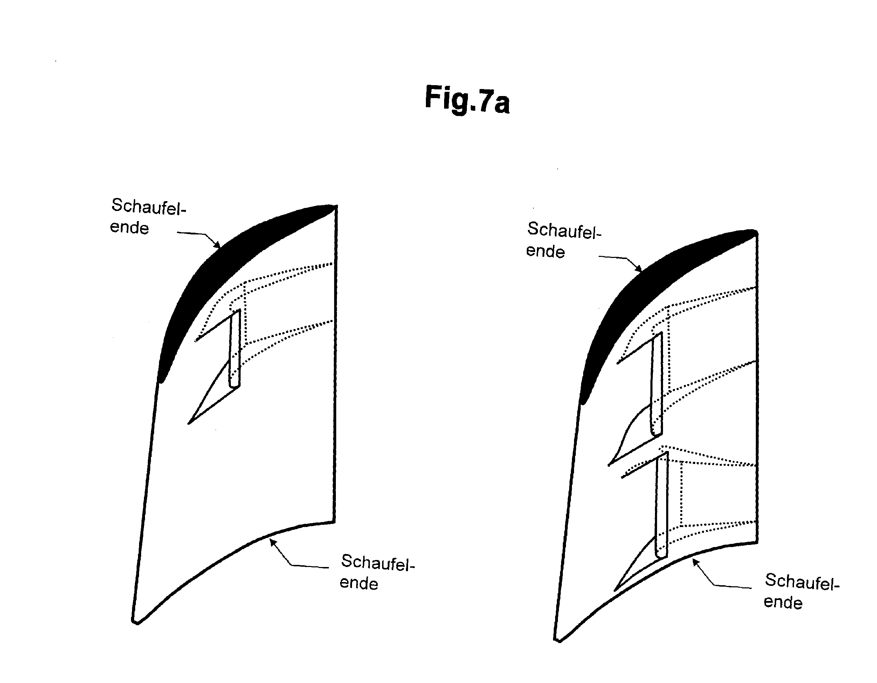

Die Figuren 7a bis 7c zeigen erfindungsgemäße Konfigurationen mit Multi-Profil-Gestaltung in unterschiedlichen Bereichen der Schaufel.

Die Fig.7a zeigt zwei unterschiedliche Schaufeln, begrenzt durch zwei nicht weiter spezifizierte Schaufelenden, mit abschnittweise vorgesehener Unterteilung in Front-Profil und erstes Nach-Profil (N=2) im mittleren Teil der Schaufel, wobei die Unterteilungszone die Enden der Schaufel nicht erreicht. Die linke Schaufel weist einen Bereich mit Multi-Profil-Gestaltung auf, während die rechte Schaufel eine Multi-Profil-Gestaltung in zwei Bereichen der Schaufelhöhe besitzt.

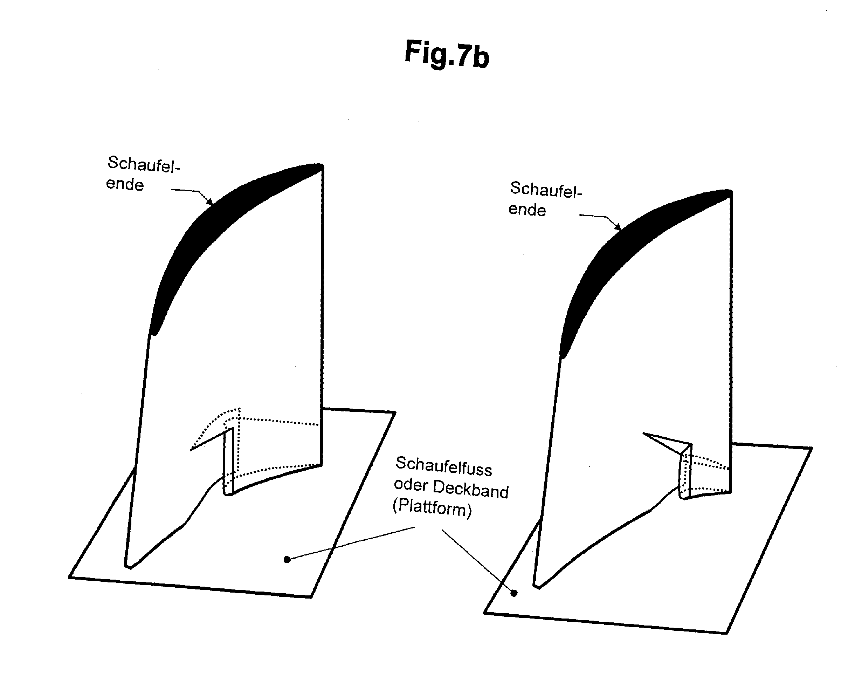

Die Fig.7b zeigt zwei unterschiedliche Schaufeln, jede begrenzt durch mindestens ein festes Ende, mit abschnittweise vorgesehener Unterteilung in Front-Profil und erstes Nach-Profil (N=2), wobei die Unterteilungszone bis an das feste Schaufelende reicht. Die Multi-Profil-Gestaltung an der linken Schaufel ist im Wesentlichen in Strömungsrichtung orientiert, während an der rechten Schaufel die Multi-Profil-Gestaltung eine zur festen Wand weisende Richtung erkennen lässt, dadurch gekennzeichnet, dass die Lücke zwischen Front- und Nach-Profil einen in Schaufelhöhenrichtung betrachtet kontrahierenden Strömungsweg vorgibt. Diese Anordnung gilt insbesondere für Schaufelenden an Rotor- oder Statorplattformen, gegeben durch Schaufelfüße oder Deckbänder.

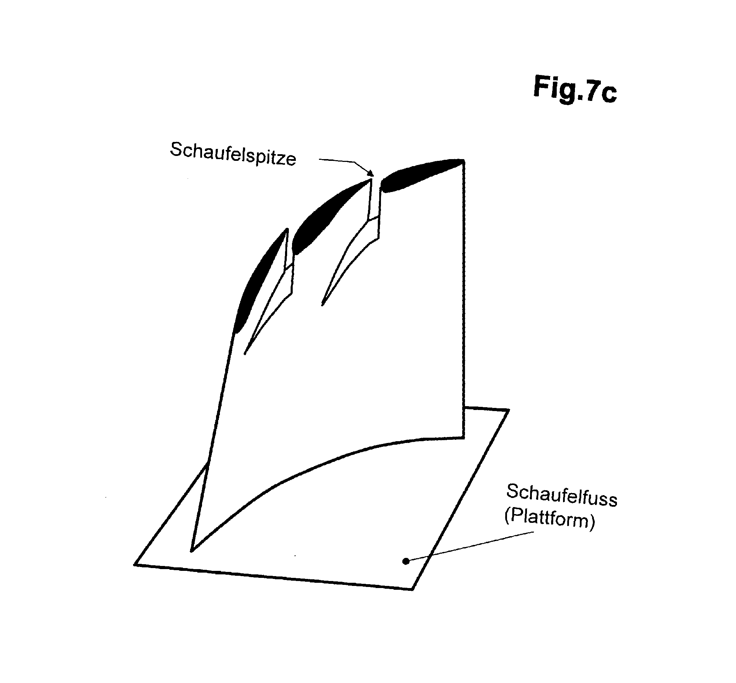

Die Fig.7c zeigt eine Schaufel, begrenzt durch mindestens ein freies Ende, mit abschnittweise vorgesehener Unterteilung in Front-Profil, erstes Nach-Profil und zweites Nach-Profil (N=3), wobei die Unterteilungszonen bis an das freie Schaufelende reichen und von unterschiedlicher Ausdehnung in Schaufelhöhenrichtung sind. Die Multi-Profil-Gestaltung in der vorderen Unterteilungszone ist im Wesentlichen in Strömungsrichtung orientiert, während in der hinteren Unterteilungszone die Multi-Profil-Gestaltung eine zum freien Schaufelende weisende Richtung erkennen lässt, dadurch gekennzeichnet, dass die Lücke zwischen den Teil-Profilen einen in Schaufelhöhenrichtung betrachtet kontrahierenden Strömungsweg vorgibt. Diese Anordnung gilt insbesondere für die Schaufelspitze von Rotoren oder Statoren mit Laufspalt.

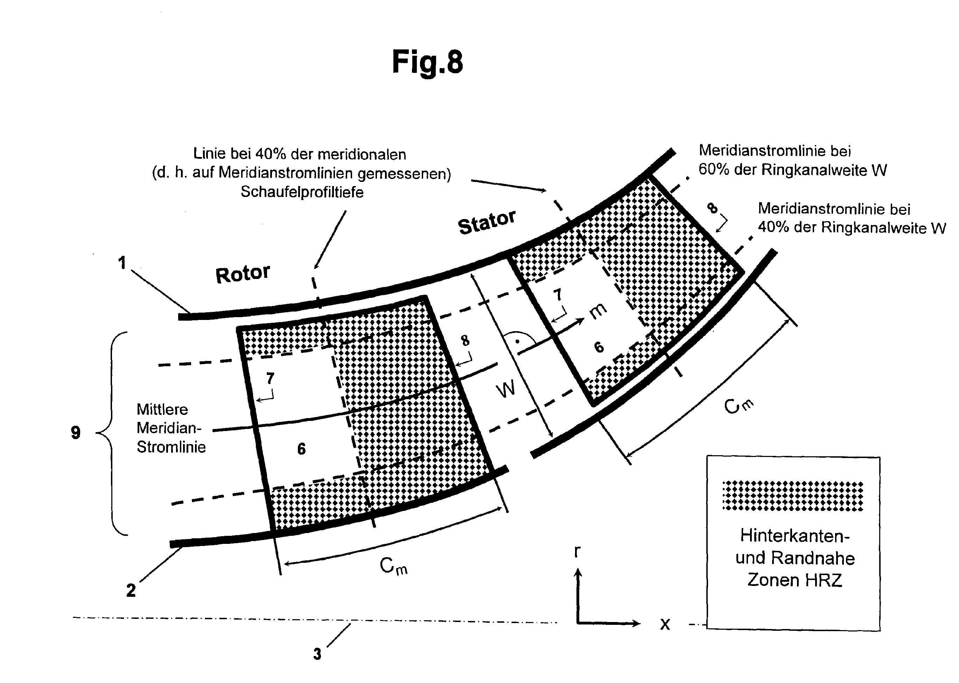

Erfindungsgemäß kann es besonders günstig sein, die Hinterkante des Front-Profils in die hinterkanten- und randnahe Zone (HRZ) einer Schaufel zu legen, siehe Fig.8. Als hinterkantennaher Bereich gilt der Abschnitt der Schaufel zwischen 40% und 100% der meridionalen Schaufelsehnenlänge Cm. Als randnaher Bereich gelten die Schaufelabschnitte zwischen 0% und 40% sowie 60% und 100% der Ringkanalweite (Schaufelhöhe).

Weitere Beschreibung der Erfindung:
1. Schaufel einer Rotor- oder Statorreihe für den Einsatz in einer Strömungsarbeitsmaschine mit Multi-Profil-Gestaltung, wobei der Querschnitt der Schaufel in mindestens einem Teil der Schaufelhöhe (Ringkanalweite) in mindestens einem Stromlinienprofilschnitt von mindestens zwei voneinander getrennten Teilprofilen gebildet wird, wobei jedes einzelne Teilprofil ebenfalls die Form eines Schaufelprofils aufweist.
2. Schaufel nach Punkt 1, wobei die mindestens zwei Teilprofile, bestehend aus Front-Profil und mindestens einem Nach-Profil, von unterschiedlicher relativer maximaler Dicke sind.
3. Schaufel nach Punkt 1 oder 2, wobei mindestens ein Nach-Profil eine mindestens um 30% größere relative maximale Dicke aufweist, als das stromauf angeordnete Front- beziehungsweise Nach-Profil.
4. Schaufel nach Punkt 1, wobei die mindestens zwei Teilprofile, bestehend aus Front-Profil und mindestens einem Nach-Profil, von gleicher relativer maximaler Dicke sind.
5. Schaufel nach Punkt 1, wobei die mindestens zwei Teilprofile, bestehend aus Front-Profil und mindestens einem Nach-Profil, von gleicher absoluter maximaler Dicke sind.
6. Schaufel nach einem der Punkte 1 bis 5, wobei mindestens eine Zone mit Multi-Profil-Gestaltung im mittleren Bereich der Schaufelhöhe, d. h. ohne eine Erstreckung bis zu den Schaufelenden, angeordnet ist.
7. Schaufel nach einem der Punkte 1 bis 5, wobei mindestens eine Zone mit Multi-Profil-Gestaltung an mindestens einem festen Schaufelende, begrenzt durch Schaufelfuß oder Deckband, angeordnet ist.
8. Schaufel nach einem der Punkte 1 bis 5, wobei mindestens eine Zone mit Multi-Profil-Gestaltung an mindestens einem freien Schaufelende mit Radialspalt zu einer Naben- oder Gehäusekontur angeordnet ist.
9. Schaufel nach einem der Punkte 1 bis 8, wobei die Multi-Profil-Gestaltung einschließlich der zwischen den Teilprofilen entstehenden Lücken im Wesentlichen in Meridianströmungsrichtung orientiert ist.
10. Schaufel nach einem der Punkte 1 bis 8, wobei die Multi-Profil-Gestaltung einschließlich der zwischen den Teilprofilen entstehenden Lücken eine Neigung in Richtung eines Schaufelendes aufweist.
11. Schaufel nach einem der Punkte 1 bis 10, wobei die Lücke zwischen zwei Teilprofilen einen in Schaufelhöhenrichtung betrachtet kontrahierenden Strömungsweg vorgibt.
12. Schaufel nach einem der Punkte 1 bis 11, wobei die Hinterkante des Front-Profils in der hinterkanten- und randnahe Zone (HRZ) liegt, wobei als hinterkantennaher Bereich der Abschnitt der Schaufel zwischen 40% und 100% der meridionalen Schaufelsehnenlänge Cm gilt und als randnaher Bereich die Schaufelabschnitte zwischen 0% und 40% sowie 60% und 100% der Ringkanalweite (Schaufelhöhe) gelten.

Die vorliegende Erfindung erlaubt eine deutlich höhere aerodynamische Belastbarkeit von Rotoren und Statoren in Strömungsarbeitmaschinen, bei gleichbleibendem oder erhöhtem Wirkungsgrad. Eine Reduzierung der Teilezahl und des Komponentengewichts von mehr als 20% scheint erreichbar. Bei Einsatz des Konzeptes im Hochdruckverdichter eines Flugtriebwerkes mit rund 25000 Pfund Schub ergibt sich eine Reduzierung des spezifischen Kraftstoffverbrauches von bis zu 0,5%.

### Bezugszeichenliste

- 1: Gehäuse
- 2: Nabe/Rotortrommel
- 3: Maschinenachse
- 4: Saugseite
- 5: Druckseite
- 6: Schaufel
- 7: Vorderkante
- 8: Hinterkante
- 9: Ringkanal
- 10: Durchlass/Durchlassöffnung

## Patentansprüche

1. Strömungsarbeitsmaschinenschaufel mit einem Querschnitt, welcher in mindestens einem Teil der Höhe der Schaufel in mindestens einem Stromlinienprofilschnitt von mindestens zwei voneinander getrennten Teilprofilen gebildet wird, wobei jedes einzelne Teilprofil die Form eines Schaufelprofils aufweist.

2. Schaufel nach Anspruch 1, wobei die mindestens zwei Teilprofile aus einem Frontprofil und mindestens einem Nach-Profil gebildet sind und mit unterschiedlicher relativer maximaler Dicke versehen sind.

3. Schaufel nach Anspruch 1 oder 2, wobei ein Nach-Profil eine mindestens um 30% größere relative maximale Dicke aufweist, als das stromauf angeordnete Profil.

4. Schaufel nach Anspruch 1, wobei die mindestens zwei Teilprofile, bestehend aus einem Frontprofil und mindestens einem Nach-Profil, von gleicher relativer maximaler Dicke sind.

5. Schaufel nach Anspruch 1, wobei die mindestens zwei Teilprofile, bestehend aus einem Frontprofil und mindestens einem Nach-Profil, von gleicher absoluter maximaler Dicke sind.

6. Schaufel nach einem der Ansprüche 1 bis 5, wobei mindestens eine Zone der Schaufel mit einer Multi-Profil-Gestaltung im mittleren Bereich der Schaufelhöhe ausgebildet ist.

7. Schaufel nach einem der Ansprüche 1 bis 5, wobei mindestens eine Zone der Schaufel mit Multi-Profil-Gestaltung an mindestens einem festen Schaufelende, begrenzt durch einen Schaufelfuß oder ein Deckband, angeordnet ist.

8. Schaufel nach einem der Ansprüche 1 bis 5, wobei mindestens eine Zone der Schaufel mit Multi-Profil-Gestaltung an mindestens einem freien Schaufelende mit Radialspalt zu einer Naben- oder Gehäusekontur angeordnet ist.

9. Schaufel nach einem der Ansprüche 1 bis 8, wobei die Multi-Profil-Gestaltung im Wesentlichen in Meridianströmungsrichtung angeordnet ist.

10. Schaufel nach einem der Ansprüche 1 bis 8, wobei die Multi-Profil-Gestaltung eine Neigung in Richtung eines Schaufelendes aufweist.

11. Schaufel nach einem der Ansprüche 1 bis 10, wobei eine Lücke zwischen zwei Teilprofilen einen in Schaufelhöhenrichtung betrachtet kontrahierenden Strömungsweg vorgibt.

12. Schaufel nach einem der Ansprüche 1 bis 11, wobei die Hinterkante eines Front-Profils in der hinterkanten- und randnahen Zone (HRZ) angeordnet ist, wobei als hinterkantennaher Bereich ein Abschnitt der Schaufel zwischen 40% und 100% der meridionalen Schaufelsehnenlänge (Cm) gilt und als randnaher Bereich Schaufelabschnitt zwischen 0% und 40% sowie 60% und 100% der Schaufelhöhe/Ringkanalweite gelten.
